# EUROPEAN PATENT SPECIFICATION

(11) **EP 1 407 152 B1**
(45) Date of publication and mention of the grant of the patent: **21.03.2007**
(21) Application number: 02749025.9
(22) Date of filing: 15.07.2002
(51) Int. Cl.: F16C 11/06

(54) **PIVOT JOINT**
GELENKVERBINDUNG
ARTICULATION A ROTULE

(30) Priority: 13.07.2001 GB 0117098
(43) Date of publication of application: 14.04.2004
(60) Divisional application: 06020367.6
(73) Proprietor: Renishaw plc, Wotton-Under-Edge Gloucestershire GL12 8JR (GB)
(72) Inventor: MCMURTRY, David Roberts, Dursley, Gloucestershire GL11 6AT (GB)
(74) Representative: Fowler, Maria Jayne
(86) International application number: PCT/GB2002/003294
(87) International publication number: WO 2003/006837

(56) References cited:
- DE-A- 3 818 254
- DE-A- 4 333 913
- DE-C- 19 938 242
- FR-A- 947 212
- US-A- 3 490 798
- US-A- 5 568 993

## Description

The present invention relates to a pivot joint, in particular a high precision ball joint.

Pivot joints which comprise a ball on a stalk are known. In such pivot joints the ball is located within a socket with the stalk protruding from the socket. These pivot joints have the disadvantage that they are not high precision, particularly because the ball part is not accurately spherical. A further disadvantage is that parts cannot be cheaply replaced when worn.

Accurate spheres (i.e. ball bearings) can be made very precisely by a lapping process.

US Patent No. 3,490,798 discloses a ball and socket joint comprising a ball and two coupling members. Each coupling member has two parts which interconnect via a dovetail joint. The coupling members are relatively rotated by 90° and the dovetail joints are designed to enable rotational construction of the joint. This allows sequential construction of the coupling members.

The present invention provides a pivot joint according to claim 1.

The ball is preferably held in location by contact with the first structure at at least two positions.

The at least two positions of contact are preferably on opposite sides of the ball. They may be diametrically opposite, but this is not essential and in some circumstances, for example where a precision joint is required it is preferred that the positions of contact are formed as the apexes of triangles whose centre passes through the ball.

Preferably, the second structure is captured between the first structure and the ball. Thus, the first and second structures are interconnected via the ball. In this configuration, at least one contact is on either side of the second structure i.e. at least one contact is on each side of the bearing surface which defines the position of the second structure with respect to the ball.

In a preferred embodiment, at least one of the positions of contact is adjustable.

Preferably the ball is held or fixed in location by at least four points of contact with the first structure.

When the ball is held in location, then it may be movable with respect to the first structure as well as the second. However, when a high precision joint is required, the ball needs to be stationary with respect to the first structure and thus is fixed in position. By having at least one adjustable position of contact, either of these states may be used, as required.

Alternatively, the ball is held in location with respect to the first structure or fixed by a conical recess and at least one point of contact.

Preferably the second structure has three bearing surfaces. Alternatively the second structure may have two bearing surfaces.

In a preferred embodiment, the second structure is biased into contact with the ball. Such a bias may be provided by a spring, magnet, vacuum or elastic band.

Preferably, the at least two positions are on opposite sides of the ball.

In preferred embodiments the ball is fixed or held in location by at least four points of contact or, alternatively, by a conical recess and at least one point of contact.

Preferably, at least two areas of the peripheral surface are configured to be in sliding contact with the ball and areas of the peripheral surface between said at least two areas are configured not to be in contact with the ball.

Pivot joints according to the invention enable the production of (high) precision joints at low cost. Ball bearings with highly spherical surfaces can be used to produce a smooth and precise motion between two structures that have not undergone expensive accurate machining processes. One of the reasons that these pivot joints are so accurate is because the ball may be held or fixed in location without the use of a screw stud which would affect the sphericity and smoothness of the ball surface and joint movement.

Embodiments of the invention will now be described by way of example and with reference to the accompanying drawings in which:
Fig 1 is an isometric view of a coordinate measuring machine using the pivot joint of the invention;
Fig 2 is an isometric view of the upper stage of the coordinate measuring machine, showing the pivot joints;
Fig 3 is a plan view of one end of a strut of the coordinate measuring machine;
Fig 4 is a plan view of the upper stage of the coordinate measuring machine, showing the pivot joint;
Fig 5 is a section along line A-A of Fig 4;
Fig 6 is a plan view of an end of an alternative strut of the coordinate measuring machine;
Figs 7 and 8 are schematic illustrations of alternative clamping arrangements of a ball in a pivot joint; and
Fig 9 is an isometric view of the upper stage of the coordinate measuring machine, showing alternative pivot joints.

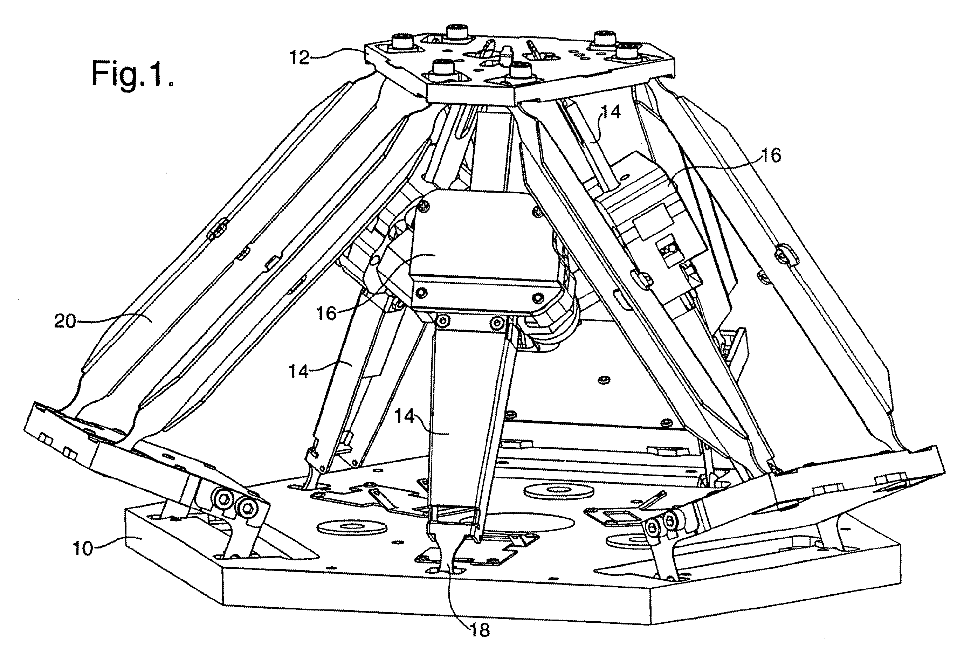

A coordinate measuring machine is shown in Fig 1. The coordinate measuring machine comprises a lower fixed stage 10 and an upper movable stage 12. The upper and lower stages are linked by telescopic struts 14, each strut being connected to the upper and lower stages at its respective upper and lower ends by pivot joints. Each strut has a motor 16 to increase or decrease its length.

As the upper stage 12 is supported only by the three telescopic struts 14 which are connected to the upper and lower stages by pivot joints, this stage may rotate about three perpendicular axes relative to the lower stage 10. To prevent this, three anti-rotational devices 20 are provided which eliminate these three degrees of rotational freedom whilst allowing translational movement. The devices are passive, i.e. they have no motor or other actuator. The joints between the anti-rotational devices 20 and the upper and lower stages 12,10 are also pivot joints.

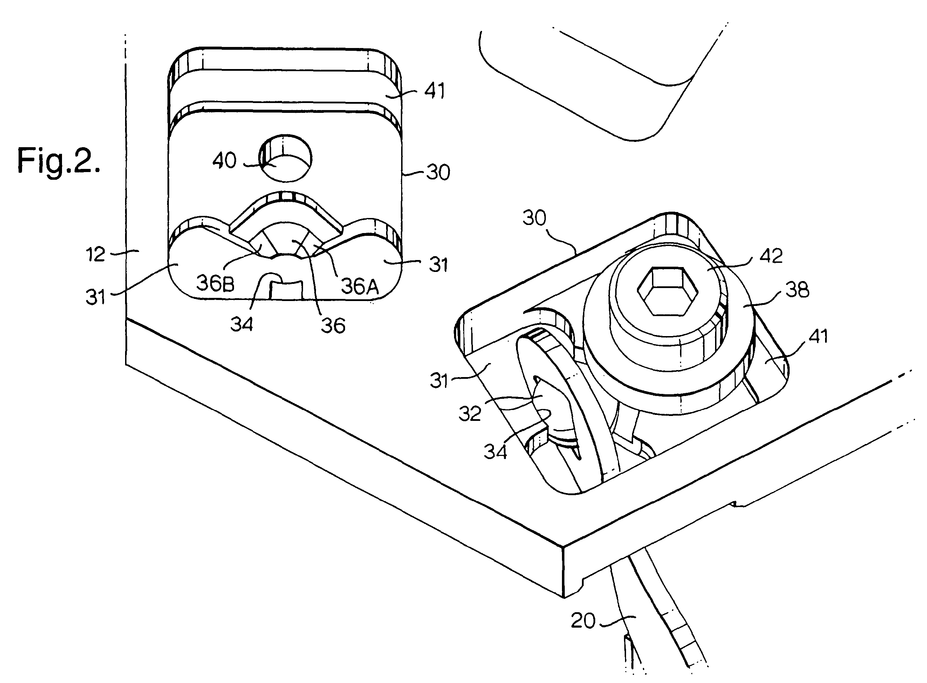

A pivot joint between the upper stage 12 and an anti-rotational device 20 is shown in more detail in Figs 2,4 and 5. The upper stage 12 is provided with structured cut-outs 30. A ball 32 of the pivot joint is supported within the cut-out 30 by surfaces defining the periphery of the cut-out 30. Two cut-outs 30 are shown in Fig 2, one with the other components of the ball joint in place and the other without.

The ball 32 is supported by two opposite surfaces 34,36 of the cut-out 30. A first curved surface 34 contacts a side of the ball 32, and a second curved surface 36 contacts a lower surface of the ball 32 with two points of contact 36A, 36B. The position of the ball 32 is defined by these three points of contact 34,36A,36B and a fourth point of contact provided by a clamp 38,42.

In this example the clamp comprises a washer 38 and a fixing device 42, such as a screw or bolt. The washer 38 sits on a shelf 41 provided in the cut-out 30 in the upper stage 12, an edge of its lower surface in contact with the ball 32. The upper stage 12 is provided with a hole 40 aligned with the centre of the washer 38, to receive the fixing device 42 which holds the washer 38 against the ball 32. The ball 32 is thus held rigidly in a fixed position at four places around its surface by the first curved surface 34, by two points of contact 36A, 36B on the second curved surface 36, and by the washer 38.

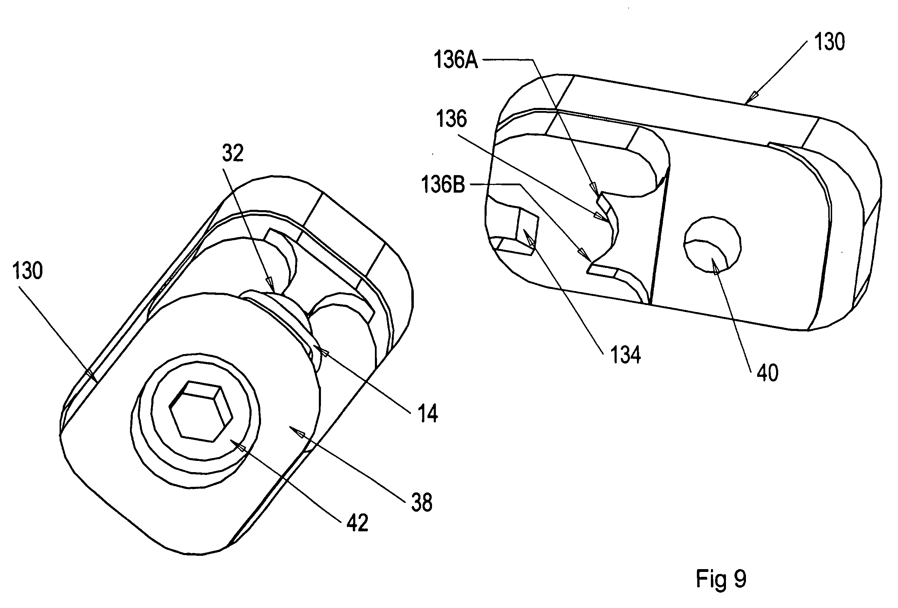

An alternative pivot joint between the upper stage 12 and a strut 14 is shown in Fig 9. The upper stage 12 is provided with structured cut-outs 130. A ball 32 of the pivot joint is supported within the cut-out 130 by surfaces defining the periphery of the cut-out 130. Two cut-outs 130 are shown in Fig 9, one with the other components of the ball joint in place and the other without.

The ball 32 is supported by two opposite surfaces 134,136 of the cut-out 130. A first curved surface 134 contacts a lower surface of the ball 32, and a second curved surface 136 contacts a side of the ball 32 with two points of contact 136A,136B. The position of the ball 32 is defined by these three points of contact 134,136A,136B and a fourth point of contact provided by a clamp 38,42.

The orientation of the contacting surfaces, for the cut-out 130 are rotated with respect to the cut-out 30 as the orientation of the strut 14 is rotated with respect to anti-rotational device 20. This can be seen in Fig 1.

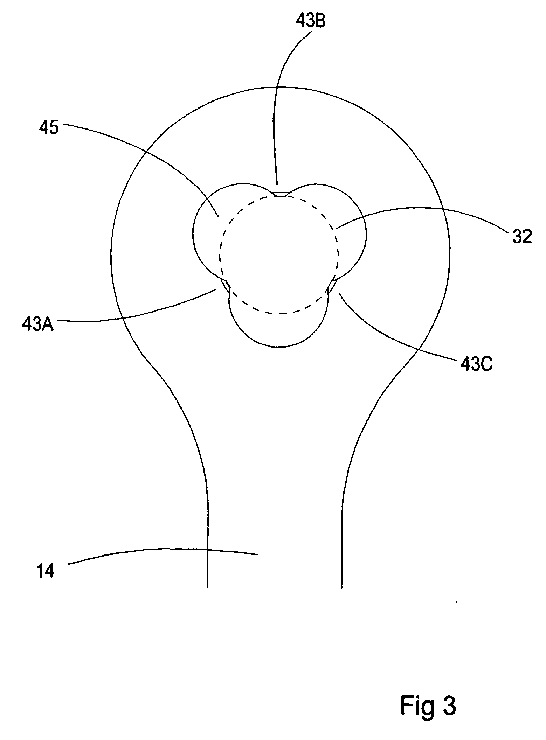

Each end of each of the telescopic struts 14 and anti-rotational devices 20 is provided with a hole 45 which fits over a ball 32 of a respective pivot joint. Each hole 45 is shaped to have three bearing surfaces 43A,B,C, spaced at 120° apart, as shown in Fig 3. Only the three bearing surfaces are in contact with the ball 32. These bearing surfaces have small areas of contact with the ball 32 to maximise slide between the surfaces. These small areas of contact also provide repeatable positioning of the strut 14 or anti-rotational device 20 with respect to the ball 32.

Although the examples show the second structure 14,20 encircling the ball 32, this is not essential. Thus, the second structure may substantially encircle the ball with a gap in the structure (the limiting size of any gap is a function of the diameter of the ball and the position of the bearing surfaces of the second structure).

It should be noted that whilst it is preferred that both the struts 14 and anti-rotational devices 20 have pivot joints according to the invention, this is not essential.

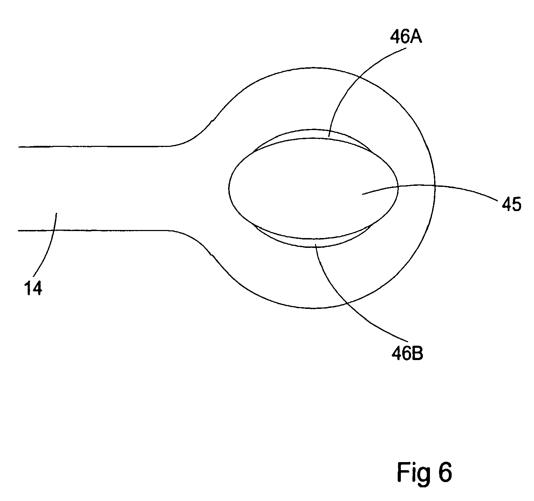

Fig 6 shows an alternative arrangement of the bearing surfaces. In this arrangement the hole 45 is oval with only two bearing surfaces 46A, 46B. As the bearing surfaces wear, they sit further down onto the surface of the ball, thus reducing rattle between the bearing surfaces and the ball. This arrangement is particularly suitable when the force on the bearing surface is parallel to an axis perpendicular to the plane of the bearing surfaces (for example if the ball joint is used in a jack).

The struts 14 and anti-rotational devices 20 are formed from a good bearing material, such as phosphor bronze. The strut 14 may be made by etching and then machining or stamping the holes 45 to accurately control the length and geometry of the holes 45.

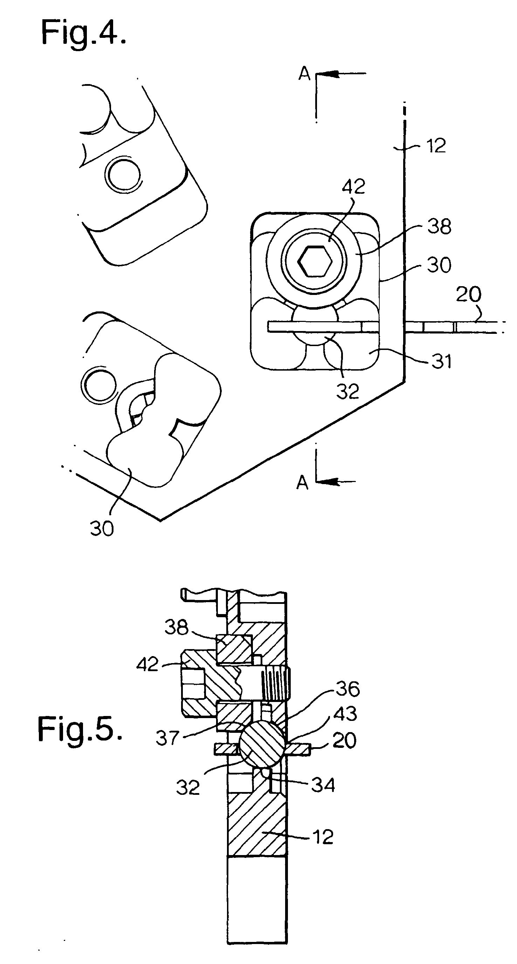

A side view of the upper stage 12 with an anti-rotational device 20 mounted on a pivot joint is shown in Fig 5 which is a section along line A-A of Fig 4. The ball 32 can be seen to be held in position by three of the four points of contact. These are the first curved surfaces 34 and two points of contact on the second curved surface 36 provided on the stage 12 and the surface 37 of the washer 38. These surfaces are shown to be spaced around the circumference of the ball 32. The surface 37 of washer 38 in contact with the ball 32 is a chamfered edge between the lower and side surfaces of the washer 38 and extends all around the circumference of the washer 38 so that this surface 37 is presented to the ball 32 whatever the orientation of the washer 38.

In this Figure the anti-rotational device 20 is in position and one bearing surface 43 can be seen to be in contact with the ball 32. The other two bearing surfaces cannot be seen in this Figure.

The location of the four points of contact between the ball 32 and upper stage 12 and washer 38 allows sufficient space for the end of the anti-rotational device 20 to move about the ball 32. In addition, the structured cut-outs 30 each have cut-out lobes 31 either side of the ball 32 to allow enough room for the end of the anti-rotational device 20 to manoeuvre. The three bearing surfaces 43A,B,C remain in contact with the ball yet move over the ball to allow the arm of the anti-rotational device 20 to rotate about the ball 32.

In the event of a jolt the bearing surfaces will spring off the ball, hit a solid stop (i.e. the edges of the cut-out structure 30) and return to their position on the ball. The ball joint is thus self-protecting. Where high precision ball joints are required, coil springs may be provided, for example between the two parts of an anti-rotational device 20, to urge the bearing surface(s) onto the ball 32. Such springs would assist in returning the bearing surfaces onto the ball after any jolt and add rigidity to the structure. The person skilled in the art will appreciate that biasing means would be advantageous at other locations on an apparatus incorporating a ball joint according to the invention.

An alternative way of urging the bearing surfaces onto the ball 32 is by biasing the second structure 14,20. One way to achieve this is to provide a plate which has one end clamped to the second structure 14,20 and the other end pressing against the ball 32. The plate thus acts like a leaf spring. The clamp is preferably removably fixed by, for example, a screw, to enable removal of the ball 32 for maintenance or replacement thereof. The word plate is intended to include all the various shapes and structures that are suitable for providing a bias such as a washer. Such a plate could be used in conjunction with washer 38 or as a replacement.

The ball used in the pivot joint may be made of any hard/low friction material or alternatively made of any material coated with a hard/low friction material.

Although the above example describes the use of a pivot joint in a coordinate measuring machine, this pivot joint is not limited to use with such machines and may be used in other applications.

Furthermore the invention is not limited to the method of locating a ball as described above. Although the embodiment describes four points of contact with the ball, one of which is adjustable, it is possible to have more than a total of four points of contact with the ball. In addition it is possible to have more than one adjustable point of contact, for example all four points of contact could be adjustable.

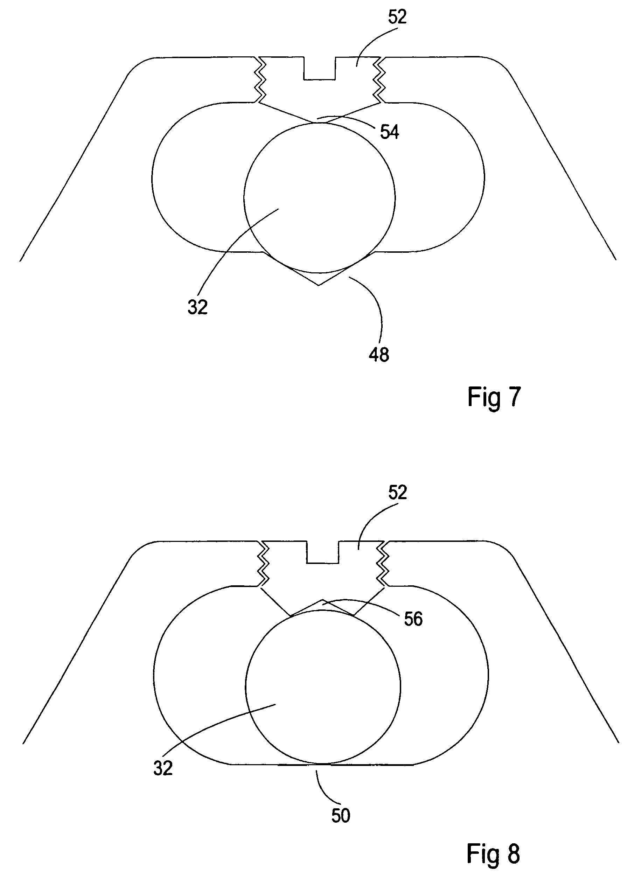

An alternative method of clamping a ball rigidly in a precise location is shown in Fig 7. The ball 32 is located in a conical recess 48 and held in place by a securing device 52 (for example a screw) with one point of contact 54 with the ball 32. Of course the securing device 52 may have more than one point of contact with the ball 32 (for example a v-groove).

Fig 8 shows another method of clamping a ball rigidly in a precise location. The ball 32 is located on a flat surface 50 and is held in place by a securing device 52 which has a conical recess 56 in contact with the surface of the ball 32.

The ball may also be held in position by permanent methods such as bonding, braising and welding. However these methods have the disadvantage that the ball is then no longer replaceable.

This pivot joint has the advantages that it is both cheap to manufacture and easy to assemble.

The cut-out structure which holds the ball is easy to machine. Repeatable positioning of a free ball within this structure enables the ball to be easily replaced. Furthermore use of commercially available accurate spheres (for example ball bearings) combined with precise positioning in the structure produces a high precision ball joint.

The use of the word pivot in the phrase pivot joint throughout this specification is defined as including pivot joints with one, two and three degrees of freedom as well as universal joints having two or three degrees of freedom.

## Claims

1. A pivot joint comprising:
a ball (32) mounted in a first structure (10,12), wherein the location of the ball is held with respect to the first structure; and
a second structure (14,20) mounted on and movable with respect to the ball, wherein the second structure has at least one bearing surface (43,46) which defines its position with respect to the ball, **characterised in that** the first structure comprises a clamp (38, 42, 52) for holding the ball (32) rigidly with respect to the first structure (10,12),
wherein the ball is held stationary and in a fixed position with respect to the first structure when held by the clamp (38, 42, 52),
wherein the first structure comprises a cut-out (30) for receiving said ball (32), wherein the clamp (38, 42, 52) is arranged to rigidly hold the ball in the cut-out.

2. A pivot joint according to claim 1 wherein the ball (32) is held in location by contact with the first structure at at least two positions (36A, 36B).

3. A pivot joint according to claim 2 wherein the at least two positions of contact (36A, 36B) are on opposite sides of the ball.

4. A pivot joint according to claim 3 wherein the second structure (14,20) is captured between the first structure and the ball (32).

5. A pivot joint according to any of claims 2 to 3 wherein at least one of the positions of contact (38,52) is adjustable.

6. A pivot joint according to any preceding claim wherein the ball (32) is fixed in location by at least four points of contact (34,36A,36B,38) with the first structure.

7. A pivot joint according to any of claims 1 to 5 wherein the ball (32) is held or fixed in location with respect to the first structure by a conical recess (48) and at least one point of contact (54).

8. A pivot joint according to any preceding claim wherein the second structure (14) has three bearing surfaces (32).

9. A pivot joint according to any preceding claim wherein the second structure (14,20) is biased into contact with the ball (32).

10. A co-ordinate measuring machine comprising a pivot joint according to any of claims 1-9.

## Patentansprüche

1. Ein Drehgelenk mit:
einer Kugel (32), die in eine erste Struktur (10,12) eingesetzt ist, wobei die Position der Kugel in Bezug auf die erste Struktur gehalten wird; und
einer zweiten Struktur (14,20), die an der Kugel angebracht und in Bezug auf diese beweglich ist, wobei die zweite Struktur über mindestens eine Lagerfläche (43,46) verfügt, die ihre Position in Bezug auf die Kugel bestimmt,
kennzeichnend dabei ist, dass die erste Struktur mit einer Klammer (38,42,52) versehen ist, die die Kugel (32) in Bezug auf die erste Struktur (10,12) festhält, wobei die Kugel unbeweglich und in einer festen Position in Bezug auf die erste Struktur gehalten wird, wenn sie von der Klammer (38,42,52) umfasst wird,
wobei die erste Struktur über eine Aussparung (30) zur Aufnahme der besagten Kugel (32) verfügt, wobei die Klammer (38,42,52) so angeordnet ist, dass sie die Kugel in der Aussparung fest hält.

2. Ein Drehgelenk gemäß dem Anspruch 1, wobei die Kugel (32) durch Kontakt mit der ersten Struktur an mindestens zwei Stellen (36A, 34B) in ihrer Position gehalten wird.

3. Ein Drehgelenk gemäß dem Anspruch 2, wobei sich die mindestens zwei vorhandenen Kontaktstellen (36A, 36B) an gegenüberliegenden Seiten der Kugel befinden.

4. Ein Drehgelenk gemäß dem Anspruch 3, wobei die zweite Struktur (14,20) zwischen der ersten Struktur und der Kugel (32) eingefasst ist.

5. Ein Drehgelenk gemäß den Ansprüchen 2 bis 3, wobei mindestens eine der Kontaktstellen (38,52) verstellbar ist.

6. Ein Drehgelenk gemäß allen vorangehenden Ansprüchen, wobei die Kugel (32) durch mindestens vier Kontaktstellen (34,36A,36B,38) mit der ersten Struktur in ihrer Position fixiert wird.

7. Ein Drehgelenk gemäß allen Ansprüchen 1 bis 5, wobei die Kugel (32) durch eine kegelförmige Aussparung (48) und mindestens eine Kontaktstelle (54) in Bezug auf die erste Struktur in ihrer Position gehalten oder fixiert wird.

8. Ein Drehgelenk gemäß allen vorangehenden Ansprüchen, wobei die zweite Struktur (14) über drei Lagerflächen (32) verfügt.

9. Ein Drehgelenk gemäß allen vorangehenden Ansprüchen, wobei die zweite Struktur (14,20) in Kontakt mit der Kugel (32) gesetzt ist.

10. Ein Koordinatenmessgerät mit einem Drehgelenk gemäß allen Ansprüchen 1-9.

## Revendications

1. Articulation rotoïde comprenant :
une bille (32) montée dans une première structure (10,12) dans laquelle la position de la bille est maintenu par rapport à la première structure ; et
une deuxième structure (14,20) montée sur la bille et mobile par rapport à celle-ci, la deuxième structure ayant au moins une surface porteuse (43,46) définissant sa position par rapport à la bille,
se caractérisant en cela que la première structure comporte une pince (38,42,52) pour maintenir la bille (32) rigidement par rapport à la première structure (10,12), dans laquelle le bille est maintenue stationnaire et à un endroit fixe par rapport à la première structure quand elle est tenue par la pince (38,42,52),
la première structure comprenant une découpe (30) pour recevoir ladite bille (32), dans laquelle ladite pince (38,42,52) est agencée pour tenir rigidement la bille dans la découpe.

2. Articulation rotoïde suivant la revendication 1 dans laquelle la bille (32) est maintenue en position par un contact avec la première structure à au moins deux endroits (36A, 34B).

3. Articulation rotoïde suivant la revendication 2 dans laquelle les au moins deux positions de contact (36A,36B) sont sur des côtés opposés de la bille.

4. Articulation rotoïde suivant la revendication 3 dans laquelle la deuxième structure (14,20) est saisie entre la première structure et la bille (32).

5. Articulation rotoïde suivant l'une quelconque des revendications 2 à 3 dans laquelle au moins une des positions de contact (38,52) est réglable.

6. Articulation rotoïde suivant l'une quelconque des revendications précédentes dans laquelle la bille (32) est fixée en position par au moins quatre points de contact (34, 36A, 36B, 38) avec la première structure.

7. Articulation rotoïde suivant l'une quelconque des revendications 1 à 5 dans laquelle la bille (32) est maintenue ou fixée en position par rapport à la première structure par un renfoncement conique (48) et au moins un point de contact (54).

8. Articulation rotoïde suivant l'une quelconque des revendications précédentes dans laquelle la deuxième structure (14) a trois surfaces porteuses (32).

9. Articulation rotoïde suivant l'une quelconque des revendications précédentes dans laquelle la deuxième structure (14,20) est contrainte à être en contact avec la bille (32).

10. Machine à mesurer tridimensionnelle comportant une articulation rotoïde suivant l'une quelconque des revendications 1 à 9.
